Europäisches Patentamt

European Patent Office

Office européen des brevets

(19)

(11) Numéro de publication : **0 239 603**
**B1**

# FASCICULE DE BREVET EUROPÉEN

(12)

(45) Date de publication du fascicule du brevet :
03.01.90

(21) Numéro de dépôt : 86905858.6

(22) Date de dépôt : 03.10.86

(86) Numéro de dépôt international :
PCT/FR 86/00343

(87) Numéro de publication internationale :
WO/8701962 (09.04.87 Gazette 87/08)

(51) Int. Cl.$^5$ : **B 01 D 53/14, C 01 B 17/16**

(54) PROCEDE ET DISPOSITIF POUR L'EXTRACTION SELECTIVE DE L'H 2?S D'UN GAZ EN CONTENANT.

(30) Priorité : 04.10.85 FR 8514743

(43) Date de publication de la demande :
07.10.87 Bulletin 87/41

(45) Mention de la délivrance du brevet :
03.01.90 Bulletin 90/01

(84) Etats contractants désignés :
BE DE GB IT NL

(56) Documents cités :
FR—A— 2 305 413
US—A— 4 129 425
US—A— 4 293 531

(73) Titulaire : SOCIETE NATIONALE ELF AQUITAINE
(PRODUCTION)
Tour Elf 2, Place de la Coupole La Défense 6
F-92400 Courbevoie (FR)

(72) Inventeur : ELGUE, Jean
1, chemin Cloharé
F-64140 Lons (FR)
Inventeur : OLIVEAU, Olivier
Allée des Prés
F-64230 Lescar (FR)
Inventeur : PEYTAVY, Jean-Louis
Bourgaber
F-64230 Lescar (FR)

(74) Mandataire : Boillot, Marc
SOCIETE NATIONALE ELF AQUITAINE Division Propriété Industrielle Tour Elf
F-92078 Paris la Défense Cédex 45 (FR)

## Description

L'invention concerne un procédé pour l'extraction sélective de l'$H_2S$ contenu dans un gaz en même temps que d'autres composés gazeux acides tels que $CO_2$.

L'extraction sélective de l'$H_2S$ contenu dans un gaz en même temps que d'autres composés gazeux acides tels que $CO_2$ est couramment utilisée pour éliminer la plus grande partie, voire la quasi-totalité, de l'$H_2S$ présent dans ce gaz en vue de produire un gaz désulfuré ayant une teneur en $H_2S$ inférieure à un seuil imposé et/ou de générer un courant de gaz acide riche en $H_2S$ et renfermant une quantité aussi faible que possible d'autres composés acides tels que $CO_2$, un tel courant de gaz acide étant utilisable comme source d'$H_2S$ pour la production de soufre suivant le procédé CLAUS d'oxydation ménagée de l'$H_2S$ ou encore pour la synthèse de composés thioorganiques.

Une telle extraction sélective de l'$H_2S$ est habituellement effectuée par lavage du gaz à traiter au moyen d'un liquide absorbant régénérable par chauffage et sélectif d'$H_2S$, c'est-à-dire d'un liquide absorbant qui d'une part est susceptible de retenir les composés gazeux acides tels que $H_2S$ et $CO_2$ et de restituer pratiquement la totalité de ces composés acides par chauffage et d'autre part possède un pouvoir absorbant nettement plus important à l'égard d'$H_2S$ qu'à l'égard des autres composés acides et notamment de $CO_2$. Le liquide absorbant fixe les composés gazeux acides par simple dissolution physique ou/et par dissolution après formation d'un sel ou d'un complexe, instable thermiquement, par réaction desdits composés gazeux acides avec un composé basique, par exemple amine ou alcanolamine, contenu dans le liquide absorbant.

En pratique, le gaz à traiter, qui renferme l'$H_2S$ et éventuellement d'autres composés gazeux acides tels que $CO_2$, est mis en contact, dans une zone d'absorption, avec le liquide absorbant choisi, circulant à contre-courant, de manière à produire un gaz à teneur réduite en $H_2S$, que l'on évacue en tête de la zone d'absorption, et à soutirer en fond de ladite zone un courant de liquide absorbant chargé en $H_2S$ et renfermant aussi peu que possible de $CO_2$ et autres composés gazeux acides. Ledit courant de liquide absorbant est alors introduit dans une zone de régénération, dans laquelle il est soumis à des conditions de pression et température propres à assurer la libération quasi-complète des composés gazeux acides absorbés, qui sont évacués en tête de la zone de régénération sous la forme d'un effluent gazeux acide riche en $H_2S$, et à produire en fond de zone de régénération un liquide absorbant régénéré, pratiquement exempt de composés gazeux acides dissous, qui est soutiré et réutilisé comme liquide absorbant dans la zone d'absorption.

Lorsque l'effluent gazeux acide riche en $H_2S$ évacué en tête de la zone de régénération ne renferme pas une teneur suffisante en $H_2S$ permettant d'utiliser ledit effluent dans l'application envisagée, notamment la fabrication de soufre par oxydation ménagée de l'$H_2S$ ou la synthèse de composés thioorganiques, les opérations sont répétées, c'est-dire que l'effluent gazeux acide est traité dans une seconde zone d'absorption par un liquide absorbant également sélectif de l'$H_2S$ et régénérable par chauffage pour fournir un courant de liquide absorbant fortement chargé en $H_2S$, qui est dirigé vers une seconde zone de régénération pour être régénéré comme indiqué plus haut avec production d'un effluent gazeux acide ayant une teneur plus élevée en $H_2S$ que l'effluent gazeux acide issu du premier traitement.

Une telle manière d'opérer présente, entre autres, l'inconvénient d'avoir à utiliser des installations très volumineuses pour produire un effluent gazeux acide suffisamment riche en $H_2S$ pour être utilisable dans les applications, telles que précitées, pour lesquelles il est destiné et de ce fait elle est fort onéreuse.

Dans la citation FR-A-2 305 413 ont décrit un procédé de purification d'un courant d'hydrocarbures gazeux renfermant des composés gazeux acides tels que $CO_2$, dans lequel on met en contact le courant d'hydrocarbures gazeux, dans une zone d'absorption, avec un liquide absorbant des composés gazeux acides de manière à produire un courant gazeux riche en hydrocarbures et pauvre en composés gazeux acides et un liquide absorbant chargé riche en composés gazeux acides et renfermant des hydrocarbures et l'on introduit le liquide absorbant chargé dans la partie supérieure d'une zone de régénération et effectue dans ladite zone la régénération dudit liquide absorbant chargé de manière à produire, en tête de la zone de régénération, un flux gazeux riche en hydrocarbure et pauvre en composés gazeux acides, que l'on recycle dans la zone d'absorption, et à soutirer latéralement, en un point situé en-dessous du point d'introduction du liquide absorbant chargé dans la zone de régénération, un effluent gazeux riche en composés gazeux acides et pauvre en hydrocarbures, et à évacuer, en fond de la zone de régénération, un liquide absorbant régénéré, que l'on recycle dans la zone d'absorption.

Dans un tel procédé, le solvant utilisé n'est pas sélectif de l'$H_2S$ et de plus la régénération du liquide absorbant chargé de composés gazeux acides et réalisée de manière à récupérer la quasi-totalité desdits composés gazeux acides dans l'effluent gazeux acide soutiré latéralement, avec comme résultat qu'aucun enrichissement en $H_2S$ n'est réalisé lorsque le liquide absorbant chargé à régénérer renferme $H_2S$ en même temps que d'autres composés gazeux acides tels que $CO_2$.

Dans la citation US-A-4 129 425 on a proposé un procédé pour l'extraction d'un ou plusieurs composés gazeux contenus dans un mélange gazeux au moyen d'un liquide absorbant desdits composés gazeux et régénérable par chauffage, en opérant dans une zone de traitement unique. Ce procédé consiste à introduire du liquide absorbant dans la partie supérieure de la zone de traitement, ledit liquide absorbant s'écoulant vers la partie inférieure de cette zone, à injecter le mélange gazeux à traiter dans la zone de traitement en un point situé à une distance suffisante en-dessous de l'introduction du liquide absorbant pour réaliser l'extraction désirée du ou desdits composés gazeux présents dans le mélange gazeux à traiter et à évacuer en tête de ladite zone de traitement un mélange gazeux traité ayant une teneur réduite en ledit ou lesdits composés gazeux à extraire, à fournir au liquide absorbant, dans la partie inférieure de la zone de traitement, une énergie calorifique suffisante pour libérer les composés gazeux absorbés par le liquide absorbant et ainsi assurer la régénération de ce liquide et à soutirer en fond de zone un courant de liquide absorbant régénéré, qui est recyclé, après refroidissement, dans la partie supérieure de la zone de traitement, à établir un pic de concentration pour le ou les composés gazeux à extraire dans une portion étroite d'une zone intermédiaire située dans la zone de traitement entre le niveau d'injection du mélange gazeux à traiter et la partie de la zone de traitement où est fournie l'énergie calorifique et à extraire de ladite portion étroite de la zone intermédiaire un effluent riche en le ou les composés gazeux que l'on désire extraire. Le pic de concentration en le ou les composés gazeux à extraire dans la portion étroite de la zone intermédiaire de la zone de traitement est établi en maintenant la température du liquide absorbant descendant entrant dans ladite zone intermédiaire à une valeur suffisamment inférieure à celle de la température de la phase gazeuse ascendante libérée par la régénération du liquide absorbant et pénétrant dans ladite zone intermédiaire pour réaliser, dans ladite portion étroite de la zone intermédiaire, la condensation d'une majeure partie des vapeurs de solvant contenues dans ladite phase gazeuse ascendante, ce qui crée dans cette portion étroite un fort gradient de température, et en maintenant au-dessus de la dite portion des facteurs de stripage supérieurs à 1 pour le ou les composés gazeux à extraire et inférieurs à 1 pour les autres composés gazeux moins solubles.

Comme il ressort de la lecture de l'exemple 2 de la citation US-A-4 129 425, un tel procédé appliqué au traitement d'un mélange gazeux renfermant des composés gazeux acides incluant $H_2S$ peut conduire à la production d'un effluent gazeux acide plus concentré en composés gazeux acides que le mélange gazeux soumis au traitement, mais dans lequel le rapport molaire de l'$H_2S$ à l'ensemble des composés gazeux acides plus volatils que le liquide absorbant et incluant $H_2S$ est le même que dans le mélange gazeux à traiter, ce qui signifie que l'extraction de l'$H_2S$ n'est pas sélective.

Au contraire l'invention a pour objet un procédé d'extraction de l'$H_2S$ contenu dans un gaz en même temps que d'autres composés gazeux acides tels que $CO_2$, au moyen d'un liquide absorbant desdits composés gazeux acides et régénérable par chauffage, qui est mis en œuvre dans une zone d'absorption associée à une zone de traitement mixte combinant une régénération du liquide absorbant et un enrichissement en $H_2S$ de la phase gazeuse acide libérée par ladite régénération et qui permet de produire un effluent gazeux acide fortement enrichi en $H_2S$ par rapport à l'effluent gazeux susceptible d'être obtenu en faisant appel au procédé de la citation.

En particulier, lorsque le gaz à traiter renferme $CO_2$ en plus de l'$H_2S$, le procédé selon l'invention permet de limiter la coabsorption du $CO_2$ par le liquide absorbant et ainsi de réduire très fortement la quantité de $CO_2$ passant dans l'effluent gazeux acide enrichi en $H_2S$ même si le gaz à traiter renferme une teneur importante de $CO_2$.

Le procédé selon l'invention pour l'extraction sélective de l'$H_2S$ contenu dans un gaz en même temps que d'autres composés gazeux acides tels que $CO_2$, est du type dans lequel on met en contact le gaz à traiter, dans une zone d'absorption, avec un liquide absorbant régénérable par chauffage, circulant à contre-courant, de manière à évacuer un gaz à teneur réduite en $H_2S$ en tête de la zone d'absorption et un courant de liquide absorbant chargé de composés acides en fond de ladite zone, on introduit ledit courant de liquide, sans l'avoir réchauffé, dans la partie supérieure d'une zone de traitement mixte ou zone de régénération, dans laquelle ledit liquide absorbant s'écoule vers la partie inférieure, on fournit au liquide absorbant, dans la partie inférieure de ladite zone mixte, une énergie calorifique suffisante pour libérer les composés gazeux acides absorbés par ledit liquide absorbant et assurer ainsi sa régénération, on évacue en fond de cette zone mixte un courant de liquide absorbant régénéré, qui est utilisé pour constituer une partie ou la totalité du liquide absorbant mis en contact, dans la zone d'absorption, avec le gaz à traiter et l'on soutire un effluent gazeux acide en un point de la zone de traitement mixte situé entre le point d'amenée du liquide absorbant chargé de composés acides issu de la zone d'absorption et la partie inférieure de ladite zone mixte où est fournie l'énergie calorifique et recueille en tête de la zone de traitement mixte une phase gazeuse formée par le reste de la phase gazeuse produite par la régénération du liquide absorbant dans cette zone mixte, et il se caractérise en ce que l'on utilise un liquide absorbant sélectif de l'$H_2S$ à titre de liquide absorbant des composés gazeux acides et en ce que l'on contrôle l'énergie calorifique fournie au liquide absorbant dans la zone de traitement mixte pour que la température dans ladite zone mixte au niveau du soutirage de l'effluent gazeux acide soit supérieure d'au plus 30 °C à la température du liquide absorbant entrant dans la zone d'absorption.

Dans la zone de traitement mixte, l'espace compris entre le niveau d'introduction du liquide absorbant chargé d'$H_2S$ issu de la zone d'absorption et le niveau du soutirage de l'effluent gazeux acide fortement enrichi en $H_2S$ constitue une zone d'enrichissement, tandis que l'espace compris entre ledit niveau de soutirage et le fond e la zone de traitement mixte joue le rôle de zone de régénération.

Le débit de l'effluent gazeux acide fortement enrichi en $H_2S$, qui est soutiré de la zone de traitement mixte, dépend de la teneur en $H_2S$ que l'on désire obtenir dans cet effluent et plus précisément varie en sens inverse de cette teneur. Ledit débit d'effluent gazeux acide enrichi en $H_2S$ représente une fraction du débit total des composés gazeux acides présents dans le gaz à traiter, cette fraction étant d'autant plus faible que la teneur en $H_2S$ recherchée pour l'effluent gazeux acide enrichi est élevée.

Le procédé suivant l'invention peut être utilisé pour extraire sélectivement l'$H_2S$ contenu dans tout type de gaz, qui est disponible sous une pression allant d'environ 3 bars (0,3 MPa) absolus à environ 100 bars (10 MPa) absolus.

En particulier un tel procédé est bien adapté pour le traitement des divers gaz naturels renfermant $H_2S$ et $CO_2$, en vue de produire un gaz désulfuré ayant une teneur minimale fixée en $H_2S$ et de former simultanément un effluent gazeux acide fortement enrichi en $H_2S$ et à teneur réduite en $CO_2$, ainsi que pour le traitement de gaz de synthèse renfermant $H_2S$ à côté d'une quantité importante de $CO_2$ en vue d'éliminer la quasi-totalité de l'$H_2S$ tout en limitant la coabsorption du $CO_2$.

Le liquide absorbant utilisable pour extraire sélectivement l'$H_2S$ peut être choisi parmi les divers liquides absorbants présentant une sélectivité suffisante pour l'$H_2S$ et susceptible d'être régénérés par chauffage et plus spécialement par rebouillage. Le liquide absorbant peut être à base d'un ou plusieurs solvants à action physique tels que méthanol, diméthyléther de polyéthylène glycols, N-méthyl-pyrrolidone, sulfolane, esters phosphoriques, ou bien consister en un solvant à action chimique formé par une solution aqueuse d'un ou plusieurs composés fixant les gaz acides du type $H_2S$ et $CO_2$ sous la forme de complexes ou de sels instables thermiquement, comme par exemple une solution aqueuse d'une alcanolamine telle que méthyldiéthanolamine, triéthanolamine, diisopropanolamine. Le liquide absorbant peut également être choisi parmi les mélanges des deux types de solvants précités comme par exemple les mélanges eau/diisopropanolamine/sulfolane, les mélanges eau/méthyldiéthanolamine/sulfolane et les mélanges d'eau, de méthanol et d'une ou plusieurs amines telles que méthyldiéthanolamine, monoéthanolamine, diéthanolamine et diisopropanolamine. Convient tout spécialement comme liquide absorbant sélectif de l'$H_2S$ et régénérable par chauffage, une solution aqueuse d'une alcanolamine telle que méthyldiéthanolamine, triéthanolamine et diisopropanolamine, dont la concentration en alcanolamine est comprise entre 1 N et 8 N et se situe de préférence entre 3 N et 6 N.

La pression régnant dans la zone d'absorption correspond sensiblement à celle du gaz à traiter que l'on injecte dans cette zone et peut donc aller d'environ 3 bars (0,3 MPa) absolus à environ 100 bars (10 MPa) absolus.

La température à choisir pour la mise en contact du gaz à traiter, dans la zone d'absorption, avec le liquide absorbant circulant à contre-courant n'est pas critique et dépend, entre autres, de la nature du liquide absorbant utilisé. Par exemple pour un liquide absorbant choisi parmi les solutions aqueuses d'alcanolamines, des températures d'absorption allant d'environ 10 °C à environ 80 °C peuvent être choisies. La température dans la zone d'absorption correspond sensiblement, en général, à celle du liquide absorbant introduit dans cette zone.

Le débit de liquide absorbant, qui circule dans la zone d'absorption à contre-courant du gaz à traiter, est lié, entre autres, à la teneur en $H_2S$ du gaz à traiter et également à la quantité d'$H_2S$ que l'on tolère dans le gaz désulfuré évacué en tête de la zone d'absorption. Ledit débit de liquide absorbant est ajusté pour obtenir en tête de la zone d'absorption un gaz désulfuré répondant aux spécifications imposées en ce qui concerne la teneur en $H_2S$.

Les conditions de pression et de température imposées dans l'espace de régénération ou zone de régénération, de la zone de traitement mixte sont choisies, compte-tenu de la nature du liquide absorbant employé pour fixer l'$H_2S$, de telle sorte que ledit $H_2S$ et les autres composés gazeux acides tels que $CO_2$ retenus par le liquide absorbant durant son passage dans la zone d'absorption puis dans l'espace d'enrichissement, ou zone d'enrichissement, de la zone de traitement mixte soient libérés et que le liquide absorbant soutiré en fond de la zone de régénération, c'est-à-dire en fond de la zone de traitement mixte, soit pratiquement exempt de composés gazeux acides dissous. La pression absolue à la partie supérieure de la zone de régénération est généralement comprise entre 1 et 5 bars (0,1 et 0,5 MPa) et se situe le plus souvent entre 1,3 et 2,5 bars (0,13 et 0,25 MPa). Le maintien d'une telle pression impose une température en fond de zone de régénération comprise habituellement entre 100 °C et 180 °C environ, ce qui correspond à une température en tête de la zone de régénération allant d'environ 80 °C à environ 125 °C.

Le maintien de la température requise dans la partie inférieure de la zone de régénération est réalisé par apport de l'énergie calorifique nécessaire au liquide absorbant arrivant dans ladite partie de la zone de régénération, cet apport d'énergie calorifique pouvant être effectué par toute technique connue et avantageusement par rebouillage.

Dans la zone d'enrichissement présente dans la zone de traitement mixte, le liquide absorbant, qui provient de la zone d'absorption sans être réchauffé et contient déjà une certaine quantité d'H₂S et autres composés gazeux acides tels que CO₂ absorbés extraite du gaz à traiter injecté dans la zone d'absorption, rencontre les composés gazeux acides libérés au cours de la régénération et, par suite de sa sélectivité pour H₂S, il réabsorbe une quantité supplémentaire d'H₂S et de ce fait la phase gazeuse en équilibre avec le liquide absorbant dans ladite zone d'enrichissement, au voisinage de la zone de régénération, à une teneur en H₂S nettement supérieure à celle de la phase gazeuse qui serait obtenue par régénération du liquide absorbant sortant de la zone d'absorption. En contrôlant le débit de l'effluent gazeux acide soutiré de la zone de traitement mixte on peut ajuster la teneur en H₂S de ce flux gazeux à la valeur désirée.

Le courant gazeux sortant en tête de la zone d'enrichissement, c'est-à-dire en tête de la zone de traitement mixte, a une pression inférieure à celle de la phase gazeuse acide présente en tête de la zone de régénération. Avantageusement on réintroduit ce courant gazeux dans la zone d'absorption après l'avoir amené, par compression, à une pression sensiblement égale à celle du gaz à traiter injecté dans la zone d'absorption.

Si besoin est, le courant de liquide absorbant chargé d'H₂S issu de la zone d'absorption est détendu pour amener sa pression à une valeur compatible avec la pression régnant dans la zone d'enrichissement de la zone de traitement mixte avant d'être introduit dans cette zone sans avoir été réchauffé.

Le procédé selon l'invention peut être mis en œuvre dans tout dispositif comportant une colonne d'absorption, munie en tête d'une sortie pour les gaz et en fond d'une sortie pour les liquides et équipée, dans sa moitié inférieure, d'un conduit d'injection du gaz à traiter et, dans sa moitié supérieure, d'une amenée de liquide absorbant, et une seconde colonne qui, d'une part, est pourvue, en tête, d'une sortie pour les gaz et, en fond, d'une sortie pour les liquides et, d'autre part, est équipée, dans sa partie inférieure, d'un système de chauffage et, dans sa partie supérieure, d'une amenée de liquide, la sortie pour les liquides en fond de la seconde colonne étant connectée, par un conduit de recyclage, à l'amenée de liquide absorbant de la colonne d'absorption tandis que l'amenée de liquide de ladite seconde colonne est reliée par un conduit à la sortie pour les liquides en fond de la colonne d'absorption, un organe de soutirage d'un effluent gazeux, de préférence agencé pour autoriser une variation contrôlée du débit de soutirage, étant monté sur la seconde colonne entre l'amenée de liquide et le système de chauffage équipant ladite colonne.

Dans la seconde colonne, l'espace compris entre le niveau de l'amenée de liquide et le niveau de l'organe de soutirage joue le rôle de zone d'enrichissement tandis que l'espace défini entre le niveau de l'organe de soutirage et le fond de ladite colonne joue le rôle d'une zone de régénération.

Avantageusement la sortie pour les gaz en tête de la seconde colonne est reliée à la colonne d'absorption, en-dessous de l'amenée de liquide absorbant, par un conduit sur lequel est intercalé un compresseur.

Si besoin est, une vanne de détente peut être montée sur le conduit reliant la sortie pour les liquides de la colonne d'absorption à l'amenée de liquide de la seconde colonne.

Le conduit de recyclage connectant la sortie pour les liquides en fond de la seconde colonne à l'amenée de liquide absorbant de la colonne d'absorption est généralement équipé d'une pompe et d'un système de refroidissement qui fonctionne par échange indirect de calories.

Chacune des colonnes, que comporte le dispositif suivant l'invention, peut être de tout type connu habituellement utilisé pour la mise en contact d'un gaz avec un liquide et peut, par exemple, consister en une colonne à plateaux ou encore en une colonne à garnissage.

Le nombre de plateaux ou la hauteur équivalente de garnissage des colonnes utilisées est choisi pour qu'en fonctionnement chacune des colonnes joue correctement son rôle de manière à obtenir l'enrichissement souhaité en H₂S dans l'effluent gazeux acide soutiré de la seconde colonne par l'organe de soutirage et à évacuer en tête de la colonne d'absorption un gaz qui renferme la teneur minimale imposée en H₂S.

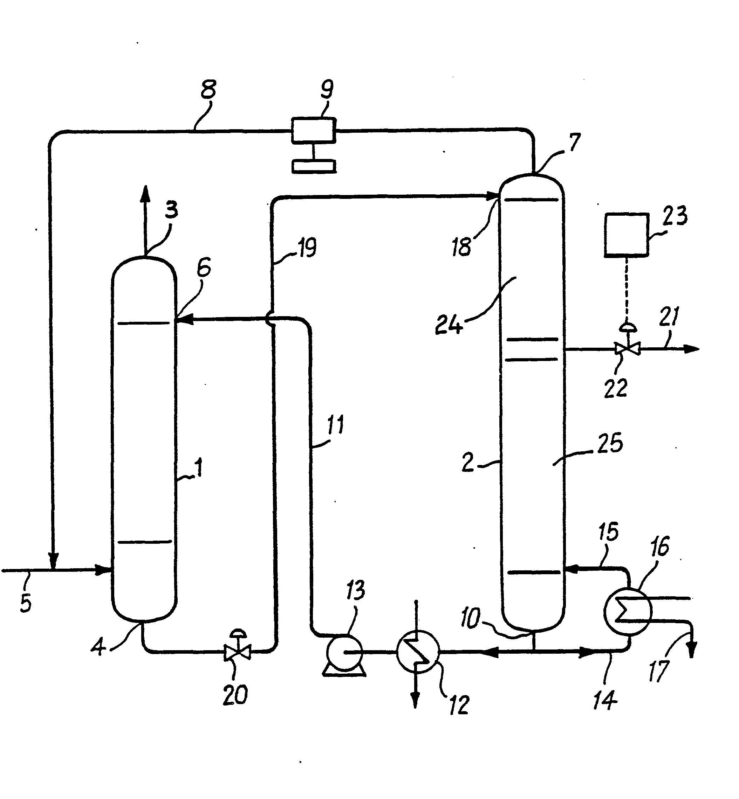

L'invention sera mieux comprise à la lecture de la description suivante de l'une de ses formes de mise en œuvre illustrée par la figure du dessin annexé représentant un dispositif suivant l'invention utilisant deux colonnes à plateaux.

En se référant à la figure, le dispositif d'extraction sélective de l'H₂S de gaz en contenant comporte deux colonnes, à savoir une colonne 1 d'absorption et une seconde colonne 2, dite colonne de traitement mixte, qui sont chacune équipées de plateaux de contact gaz/liquide. La colonne 1 est munie en tête d'une sortie 3 pour les gaz et en fond d'une sortie 4 pour les liquides et en outre elle est équipée, dans sa moitié inférieure, d'un conduit 5 d'injection du gaz à traiter et, dans sa moitié supérieure, d'une amenée 6 de liquide. La colonne 2 présente d'une part, en tête, une sortie 7 pour les gaz, qui est reliée, par un conduit 8 sur lequel est intercalé un compresseur 9, au conduit 5 d'injection du gaz à traiter équipant la colonne 1 et d'autre part, en fond, une sortie 10 pour les liquides, ladite sortie étant connectée, par un conduit 11 de recyclage, à travers le circuit d'échange chaud d'un échangeur indirect de chaleur 12 et une pompe 13, à l'amenée 6 de liquide de la colonne d'absorption. Dans sa partie inférieure, la colonne 2 est associée, par des tubulures d'entrée 14 et de sortie 15, à un rebouilleur 16 chauffé par échange indirect de calories au moyen de vapeur d'eau saturée circulant dans une tubulure 17, tandis que, dans sa partie supérieure, ladite colonne est pourvue d'une amenée 18 de liquide, qui communique avec la sortie 4 pour les liquides en fond de la colonne d'absorption par un conduit 19 sur lequel est monté une vanne de détente 20. La colonne 2 est en outre équipée d'un organe de soutirage d'un effluent gazeux, qui est disposé entre le niveau de l'amenée 18 de liquide et le niveau du rebouilleur 16 et consiste en un conduit 21 de soutirage muni d'une vanne 22 à ouverture réglable. Ladite vanne est commandée soit manuellement ou avantageusement, comme représenté, par un régulateur 23, qui peut être un régulateur de débit ou encore un régulateur de la teneur en H₂S de l'effluent gazeux soutiré à travers la vanne. Dans la colonne 2, l'espace 24 situé entre le niveau de l'amenée 18 de liquide et le niveau de l'organe de soutirage comportant le conduit 21 de soutirage joue le rôle d'une zone d'enrichissement tandis que l'espace 25 situé entre le niveau de l'organe de soutirage et le fond de la colonne joue le rôle d'une zone de régénération.

Le fonctionnement de ce dispositif peut être schématisé comme suit :

Le gaz à traiter, qui renferme l'H₂S à extraire et en outre, par exemple, du CO₂ dont on veut limiter au maximum l'extraction, arrive sous pression dans la colonne 1 d'absorption par le conduit 5 et rencontre, à contre-courant, le liquide absorbant sélectif de l'H₂S et régénérable par chauffage qui est introduit, par le conduit 11 de recyclage, au point d'amenée 6 de la colonne d'absorption et s'écoule par gravité dans ladite colonne. Par suite de sa sélectivité pour H₂S, le liquide absorbant fixe la plus grande partie de l'H₂S présent dans le gaz à traiter ainsi qu'une quantité plus faible de CO₂. Par la sortie 3 de la colonne 1 d'absorption est évacué un gaz dont la teneur en H₂S a été abaissée à la valeur minimale désirée.

Le liquide absorbant chargé des composés gazeux acides H₂S et CO₂ absorbés dans la colonne 1 d'absorption sort de ladite colonne par la sortie 4 et s'écoule par le conduit 19, en passant à travers la vanne de détente 20 pour abaisser sa pression à une valeur compatible avec celle régnant dans la colonne 2, jusqu'à la colonne 2 dans laquelle il pénètre au point 18 d'amenée des liquides. Dans cette colonne 2, le liquide absorbant chargé des composés gazeux acides H₂S et CO₂ absorbés dans la colonne d'absorption, traverse la zone 24 d'enrichissement, dont le rôle sera expliqué plus loin, et arrive dans la zone 25 de régénération. Dans cette dernière zone, le liquide absorbant est maintenu à l'ébullition sous une pression supérieure à la pression atmosphérique, ladite pression étant généralement comprise entre 1 (0,1 MPa) et 5 bars (0,5 MPa) absolus, de manière à libérer les composés gazeux acides absorbés et à réaliser leur stripage par les vapeurs du liquide absorbant. Le liquide absorbant régénéré est soutiré par la sortie 10 pour les liquides de la colonne 2 et il est ramené dans la colonne 1 d'absorption, par le conduit 11 de recyclage débouchant au point 6 dans ladite colonne 1, sous l'action de la pompe 13 et après avoir été refroidi, dans l'échangeur de chaleur 12, à la température appropriée pour sa mise en contact avec le gaz à traiter dans la colonne 1 d'absorption. Les calories nécessaires au maintien à l'ébullition du liquide absorbant dans la zone 25 de régénération de la colonne 2 sont fournies par passage d'une partie du liquide régénéré, soutiré par la sortie 10, dans le rebouilleur 16 chauffé par la vapeur d'eau saturée passant dans la tubulure 17 et retour du liquide absorbant chaud à la zone de régénération par la tubulure 15. L'énergie calorifique fournie au liquide absorbant dans le rebouilleur est de préférence contrôlée, par tout moyen connu à cet effet, pour que la température dans la colonne 2 au niveau de l'organe de soutirage de l'effluent gazeux fortement enrichi en H₂S ne soit supérieure que d'au plus 30 ºC, à la température du liquide absorbant entrant dans la colonne 1 au point 6, ce qui permet de soutirer par le conduit 21, à travers la vanne 22, un effluent gazeux pratiquement sec.

Les composés gazeux acides H₂S et CO₂ libérés dans la zone 25 de régénération de la colonne 2 sont strippés hors de cette zone par les vapeurs du liquide absorbant et sont ainsi amenés à pénétrer dans la zone 24 d'enrichissement de ladite colonne où ils rencontrent le liquide absorbant arrivant de la colonne 1 d'absorption et renfermant donc une certaine quantité d'H₂S et de CO₂ absorbés extraite du gaz à traiter injecté dans la colonne d'absorption.

Dans la zone 24 d'enrichissement de la colonne 2 le liquide absorbant, du fait de sa sélectivité pour H₂S, réabsorbe une quantité substantielle d'H₂S si bien que dans la partie de cette zone située au voisinage du niveau de soutirage la phase gazeuse en équilibre avec le liquide absorbant a une teneur en H₂S substantiellement plus élevée que la phase gazeuse susceptible d'être obtenue par régénération du liquide absorbant directement issu de la zone d'absorption.

A travers la vanne 22 montée sur le conduit 21 de soutirage, on recueille un effluent gazeux acide fortement enrichi en H₂S. Le débit de cet effluent représente seulement une fraction du débit des composés gazeux acides H₂S et CO₂ disponibles dans le gaz à traiter arrivant dans la colonne 1 par le conduit 5, cette fraction étant d'autant plus faible que la valeur désirée pour la teneur en H₂S de l'effluent recueilli est élevée.

Les composés gazeux acides non absorbés dans la zone 24 d'enrichissement de la colonne 2 sortent par la sortie 7 pour les gaz en tête de ladite colonne et sont injectés par le conduit 8, dans le conduit 5 d'amenée du gaz à traiter à la colonne 1 d'absorption, après avoir été amenés, dans le compresseur 9, à une pression sensiblement égale à celle du gaz à traiter. De cette manière, la plus grande partie du CO₂ se retrouve dans le gaz à teneur réduite en H₂S, qui est évacué par la sortie 3 pour les gaz de la colonne 1 d'absorption.

Pour compléter la description du procédé suivant l'invention, qui vient d'être présentée, on donne ci-après, à titre non limitatif, un exemple concret de mise en œuvre de ce procédé.

Exemple :

On traitait un gaz naturel consistant essentiellement en méthane et renfermant, exprimés en volume, 1 % d'H$_2$S et 3 % de CO$_2$ à titre d'impuretés acides, en opérant dans un dispositif analogue à celui décrit en référence à la figure du dessin annexé.

Dans le dispositif utilisé la colonne 1 d'absorption et la colonne 2 de traitement mixte renfermaient respectivement 14 et 28 plateaux.

Le liquide absorbant consistait en une solution aqueuse 4 N de méthyldiéthanolamine.

En comptant les plateaux de la colonne 2 à partir du sommet de cette dernière, le point d'amené du liquide absorbant issu de la colonne d'absorption était situé légèrement au-dessus du premier plateau, tandis que le conduit 21 de soutirage était monté entre le dixième et le onzième plateau, ce qui équivalait à former dans la colonne 2 une zone 24 d'enrichissement et une zone 25 de régénération comportant respectivement 10 et 18 plateaux.

Le gaz à traiter arrivait dans la colonne 1 d'absorption, par le conduit 5, avec un débit de 210 000 Nm$^3$/h, une pression absolue de 10 bars (1 MPa) et une température d'environ 50 °C et rencontrait dans ladite colonne, à contre-courant, la solution aqueuse de méthyldiéthanolamine introduite dans la colonne 1 au point 6, par le conduit de recyclage 11, avec un débit de 320 m$^3$/h et une température d'environ 62 °C.

Par la sortie 3 pour les gaz de la colonne d'absorption, on évacuait un gaz naturel désulfuré renfermant, en volume, 10 p.p.m. d'H$_2$S et 2,4 % de CO$_2$.

La solution aqueuse de méthyldiéthanolamine était portée en fond de la zone 25 de régénération de la colonne 2 à une température d'environ 130 °C par de la vapeur d'eau saturée sous une pression absolue de 4 bars (0,4 MPa) circulant dans la tubulure 1 du rebouilleur 16. La pression en fond de la zone 25 de régénération, c'est-à-dire en fond de la colonne 2 était égale à 2,4 bars (0,24 MPa).

La température dans la zone 24 d'enrichissement, et en particulier au niveau du conduit 21 de soutirage de l'effluent gazeux acide enrichi en H$_2$S, avait une valeur d'environ 64 °C, qui correspondait sensiblement à celle du liquide absorbant chargé d'H$_2$S arrivant par le conduit 19 depuis la colonne d'absorption.

Une partie, à savoir 3 200 Nm$^3$/h, des composés gazeux acides libérés dans la zone 25 de régénération de la colonne 2 était soutirée par le conduit 21 à travers la vanne 22 pour former un effluent gazeux acide enrichi en H$_2$S. Ledit effluent gazeux, qui avait une température d'environ 64 °C et était saturé en vapeur d'eau, renfermait en volume 66 % d'H$_2$S et 34 % de CO$_2$.

En tête de la colonne 2 on évacuait un courant gazeux ayant une pression absolue de 2 bars (0,2 MPa) et une température de 64 °C et renfermant en volume 90 % de CO$_2$ et 10 % d'H$_2$S, ledit courant ayant un débit de 2200 Nm$^3$/h. Ce courant gazeux était injecté, par le conduit 8, dans le courant principal de 210 000 Nm$^3$/h du gaz naturel à traiter arrivant par le conduit 5 dans la colonne d'absorption, après avoir amené sa pression, dans le compresseur 9, à une valeur sensiblement égale à celle du gaz naturel à traiter.

Sur la base des informations fournies par l'exemple précité, on peut voir que l'application du procédé suivant l'invention au traitement du gaz naturel susmentionné permet, d'une part, d'obtenir un gaz naturel pratiquement désulfuré et susceptible d'être envoyé dans les circuits de distribution et, d'autre part, de produire un effluent gazeux acide fortement enrichi en H$_2$S (composition en volume 66 % d'H$_2$S et 34 % de CO$_2$) et pratiquement sec, un tel effluent gazeux étant directement utilisable comme source d'H$_2$S pour les usines à soufre CLAUS réalisant une combustion ménagée de l'H$_2$S en soufre.

**Revendications**

1. Procédé pour l'extraction sélective de l'H$_2$S contenu dans un gaz en même temps que d'autres composés gazeux acides tels que CO$_2$, dans lequel on met en contact le gaz à traiter, dans une zone d'absorption, avec un liquide absorbant régénérable par chauffage, circulant à contre-courant, de manière à évacuer un gaz à teneur réduite en H$_2$S en tête de la zone d'absorption et un courant de liquide absorbant chargé de composés acides en fond de ladite zone, on introduit ledit courant de liquide, sans l'avoir réchauffé, dans la partie supérieure d'une zone de traitement mixte ou zone de régénération, dans laquelle ledit liquide absorbant s'écoule vers la partie inférieure, on fournit au liquide absorbant, dans la partie inférieure de ladite zone mixte, une énergie calorifique suffisante pour libérer les composés gazeux acides absorbés par ledit liquide absorbant et assurer ainsi sa régénération, on évacue en fond de cette zone mixte un courant de liquide absorbant régénéré, qui est utilisé pour constituer une partie ou la totalité du liquide absorbant mis en contact, dans la zone d'absorption, avec le gaz à traiter et l'on soutire un effluent gazeux acide en un point de la zone de traitement mixte situé entre le point d'amenée du liquide absorbant chargé de composés acides issu de la zone d'absorption et la partie inférieure de ladite zone mixte où est fournie l'énergie calorifique et recueille en tête de la zone de traitement mixte une phase gazeuse formée par le reste de la phase gazeuse produite par la régénération du liquide absorbant dans cette zone mixte, ledit procédé se caractérisant en ce que l'on utilise un liquide absorbant sélectif de l'H$_2$S à titre de liquide absorbant des composés gazeux acides et en ce que l'on contrôle l'énergie calorifique fournie au liquide absorbant dans la zone de traitement mixte pour que la température dans ladite zone mixte au niveau du soutirage de l'effluent gazeux acide soit supérieure d'au plus 30 °C à la température du liquide absorbant entrant dans la zone d'absorption.

2. Procédé suivant la revendication 1, caractérisé en ce que le débit de l'effluent gazeux acide enrichi en $H_2S$ soutiré de la zone de traitement mixte, représente une fraction du débit total des gaz acides présents dans le gaz à traiter, ladite fraction étant choisie d'autant plus faible que la teneur en $H_2S$ désirée pour l'effluent gazeux acide soutiré est élevée.

3. Procédé suivant la revendication 1 ou 2, caractérisé en ce que le gaz à traiter est injecté dans la zone d'absorption sous une pression absolue allant d'environ 3 bars (0,3 MPa) à environ 100 bars (10 MPa).

4. Procédé suivant l'une des revendications 1 à 3, caractérisé en ce que le courant gazeux recueilli en tête de la zone de traitement mixte est réintroduit dans la zone d'absorption après avoir été amené, par compression, à une pression sensiblement égale à celle du gaz à traiter injecté dans la zone d'absorption.

5. Procédé suivant l'une des revendications 1 à 4, caractérisé en ce que le liquide absorbant chargé d'$H_2S$ issu de la zone d'absorption est détendu avant d'être introduit dans la zone de traitement mixte pour amener sa pression à une valeur compatible avec la pression régnant dans ladite zone mixte.

6. Procédé suivant l'une des revendications 1 à 5, caractérisé en ce que le liquide absorbant est une solution aqueuse d'une alcanolamine fixant sélectivement l'$H_2S$ et en particulier une solution aqueuse de méthyldiéthanolamine.

7. Procédé suivant la revendication 6, caractérisé en ce que la concentration de la solution absorbante en alcanolamine est comprise entre 1 N et 8 N et de préférence entre 3 N et 6 N.

## Claims

1. A method for the selective extraction of the $H_2S$ contained in a gas at the same time as other gaseous acid compounds such as $CO_2$, wherein the gas to be treated is, in an absorption zone, brought into contact with an absorbent liquid which can be regenerated by heating, circulating in counter-current, in order to evacuate the has which has a low $H_2S$ content at the head of the absorption zone and a flow of absorbent liquid charged with acid compounds at the bottom of the said zone, the said liquid flow, without having been reheated, being introduced into the upper part of a mixed treatment zone or regeneration zone in which the said absorbent liquid flows towards the lower part, sufficient calorific energy being supplied to absorbent liquid in the lower part of the said mixed zone to release the gaseous acid compounds absorbed by the said absorbent liquid and so ensure its regeneration, a flow of regenerated absorbent liquid being drawn off at the bottom of this said mixed zone, which is used to constitute a part or all of the absorbent liquid brought into contact, in the absorption zone, with the gas to be treated, an acid gaseous effluent then being drawn off at a location on the mixed treatment zone which is situated between the point at which the acid compound charged absorbent liquid is supplied from the absorption zone and the bottom part of the said mixed zone to which the calorific energy is supplied and then, at the head of the mixed treatment zone, a gaseous phase is collected which is formed from the rest of the gaseous phase produced by regeneration of the absorbent liquid in this mixed zone, the said method being characterised in that an $H_2S$ selective absorbent liquid is used by way of a liquid for absorbing acid gaseous compounds and · further characterised in that the calorific energy supplied to the absorbent liquid in the mixed treatment zone monitored so that the temperature in the said mixed zone at the level of extraction of the acid gaseous effluent is greater by at most 30 °C than the temperature of the absorbent liquid entering the absorption zone.

2. A method according to Claim 1, characterised in that the rate of flow of acid gaseous effluent enriched with $H_2S$ extracted from the mixed treatment zone represents a fraction of the total rate of flow of acid gases present in the gas to be treated, the said fraction being chosen to be all the smaller the higher is the content of $H_2S$ desired for the extracted acid gaseous effluent.

3. A method according to Claim 1 or 2, characterised in that the gas to be treated is injected into the absorption zone at an absolute pressure ranging from about 3 bars (0,3 MPa) to approx. 100 bars (10 MPa).

4. A method according to one of Claims 1 to 3, characterised in that the gaseous current collected at the head of the mixed treatment zone is re-introduced into the absorption zone after having been brought by compression to a pressure substantially equal to that of the gas to be treated and injected into the absorption zone.

5. A method according to one of Claims 1 to 4, characterised in that the absorbent liquid charged with $H_2S$ from the absorption zone is allowed to expand prior to being introduced into the mixed treatment zone in order to bring its pressure to a value compatible with the pressure prevailing in the said mixed zone.

6. A method according to one of Claims 1 to 5, characterised in that the absorbent liquid is an aqueous solution of an alkanolamine which selectively fixes $H_2S$ and is in particular an aqueous solution of methyl diethanolamine.

7. A method according to Claim 6, characterised in that the concentration of the absorbent solution in alkanol amine is between 1 N and 8 N and is preferably between 3 N and 6 N.

## Patentansprüche

1. Verfahren zur selektiven Extraktion von in einem Gas enthaltenen $H_2S$ gleichzeitig mit anderen sauren gasförmigen Verbindungen wie $CO_2$, wobei man das zu behandelnde Gas in einer Absorptionszone mit einer regenerierbaren absorbierenden Flüssigkeit durch Erwärmen im Gegen-

strom so kontaktiert, daß man am Kopf der Absorptionszone ein Gas mit einem verminderten $H_2S$-Gehalt und am Boden dieser Zone einen Strom der mit den sauren Verbindungen beladenen Absorptionsflüssigkeit abläßt, diesen Flüssigkeitsstrom ohne Wiedererwärmung in den oberen Teil einer gemischten Behandlungszone bzw. einer Regenerationszone, in der die Absorptionsflüssigkeit in Richtung des unteren Teils strömt, einführt, der Absorptionsflüssigkeit im unteren Teil der gemischten Zone Wärmeenergie zuführt, die ausreicht, um die von der Absorptionsflüssigkeit absorbierten sauren gasförmigen Verbindungen abzutrennen und so die Regeneration der Absorptionsflüssigkeit zu gewährleisten, man am Boden der gemischten Zone einen Strom der regenerierten Absorptionsflüssigkeit abläßt, der für die Bildung eines Teils oder der Gesamtheit der Absorptionsflüssigkeit verwendet wird, die in der Absorptionszone mit dem zu behandelnden Gas kontaktiert wird, den austretenden sauren Gasstrom an einer Stelle der gemischten Behandlungszone abzieht, die zwischen der Stelle, an der die mit den sauren Verbindungen beladene Absorptionsflüssigkeit aus der Absorptionszone zugeführt wird und dem unteren Teil der gemischten Zone, dem die Wärmeenergie zugeführt wird, angeordnet ist, und man am Kopf der gemischten Behandlungszone eine gasförmige Phase sammelt, die durch den Rest der gasförmigen Phase gebildet wird, die durch die Regeneration der Absorptionsflüssigkeit in dieser gemischten Zone erzeugt wurde, dadurch gekennzeichnet, daß man eine für $H_2S$ selektive Absorptionsflüssigkeit als die Absorptionsflüssigkeit für saure gasförmige Verbindungen verwendet und die der Absorptionsflüssigkeit zugeführte Wärmeenergie in der gemischten Behandlungszone so steuert, daß die Temperatur in dieser Zone auf der Höhe des Abzugs des austretenden sauren Gasstroms diejenige der in die Absorptionszone eintretenden Absorptionsflüssigkeit um maximal 30 °C übersteigt.

2. Verfahren nach Anspruch 1, dadurch gekennzeichnet, daß die Menge des mit $H_2S$ angereicherten aus der gemischten Behandlungszone abgezogenen sauren Gasstroms einen Anteil der Gesamtmenge der in dem zu behandelnden Gas enthaltenen sauren Gase darstellt, wobei dieser Anteil umso geringer gewählt wird, je höher der gewünschte $H_2S$-Gehalt des sauren Gasabstroms ist.

3. Verfahren nach Anspruch 1 oder 2, dadurch gekennzeichnet, daß das zu behandelnde Gas in die Absorptionszone unter einem absoluten Druck von ca. 3 bar (0,3 MPa) bis ca. 100 bar (10 MPa) eingespritzt wird.

4. Verfahren nach einem der Ansprüche 1 bis 3, dadurch gekennzeichnet, daß der am Kopf der gemischten Behandlungszone gesammelte Gasstrom nach seiner Zufuhr durch Verdichtung bei einem Druck, der fast dem des in die Absorptionszone eingespritzten zu behandelnden Gases entspricht, erneut in die Absorptionszone eingeführt wird.

5. Verfahren nach einem der Ansprüche 1 bis 4, dadurch gekennzeichnet, daß die mit dem $H_2S$ aus der Absorptionszone beladene Absorptionsflüssigkeit vor der Einführung in die gemischte Behandlungszone entspannt wird, um ihren Druck auf einen Wert einzustellen, der dem in der gemischten Zone herrschenden Druck entspricht.

6. Verfahren nach einem der Ansprüche 1 bis 5, dadurch gekennzeichnet, daß die Absorptionsflüssigkeit eine wässerige Lösung eines Alkanolamins ist, das $H_2S$ selektiv fixiert, und insbesondere eine wässerige Lösung von Methyldiethanolamin.

7. Verfahren nach Anspruch 6, dadurch gekennzeichnet, daß die Konzentration der Absorptionslösung an Alkanolamin zwischen 1 N und 8 N und vorzugsweise zwischen 3 N und 6 N liegt.